# EUROPÄISCHE PATENTSCHRIFT

(11) **EP 1 211 878 B1**
(45) Veröffentlichungstag und Bekanntmachung des Hinweises auf die Patenterteilung: **25.01.2006**
(21) Anmeldenummer: 01000669.0
(22) Anmeldetag: 28.11.2001
(51) Int. Cl.: H04M 3/54, H04M 7/00, H04L 29/06

(54) **Verfahren und Vorrichtung zur Anrufumleitung mittels eines Stellvertreter in einem Kommunikationssystem**
Method and device for call forwarding by means of a substitute in a communication system
Méthode et appareil de renvoi d'appel par un représentant dans un système de communication

(30) Priorität: 29.11.2000 DE 10059175
(43) Veröffentlichungstag der Anmeldung: 05.06.2002
(73) Patentinhaber: SIEMENS AKTIENGESELLSCHAFT, 80333 München (DE)
(72) Erfinder: Bardehle, Lutz, 33154 Salzkotten (DE)

(56) Entgegenhaltungen:
- EP-A- 0 954 155
- OLIVER N ET AL: "Notes on CSTA in IP Telecommunications" ECMA TC32-TG11, 21. September 1999 (1999-09-21), Seiten 1-33, XP002241462
- OKUBO S, SKRAN D, FREUNDLICH G: "APC-1949, Report of the Portland meeting" ITU-T STANDARDISATION SECTOR, STUDY GROUP 16, [Online] 25. August 2000 (2000-08-25), Seiten 1-56, XP002243044 Gefunden im Internet: <URL:www.itu.org> [gefunden am 2003-05-27]
- PAGUREK B ET AL: "Management of advanced services in H.323 Internet protocol telephony" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26. März 2000 (2000-03-26), Seiten 91-100, XP010376009 ISBN: 0-7803-5880-5
- ROSENBERG J ET AL: "PROGRAMMING INTERNET TELEPHONY SERVICES" IEEE NETWORK, IEEE INC. NEW YORK, US, Bd. 13, Nr. 3, Mai 1999 (1999-05), Seiten 42-49, XP000870630 ISSN: 0890-8044

## Beschreibung

Die Erfindung betrifft ein Verfahren zur Anrufumleitung in einem Kommunikationssystem mit einer Vielzahl von Endgeräten gemäß dem Oberbegriff des Anspruchs 1. Ein solches Verfahren ist beispielsweise aus N. Oliver et al. "Notes on CSTA in IP Telecommunications", ECMA TC32-TG11 Working Paper (21-09-1999) bekannt.

In ITU-T H.450.3 "Call diversion supplementary services for H.323", XP002212219 ist ein Aktivieren einer sofortigen Anrufumleitung durch Einrichten eines "Call Forwarding Unconditional" (siehe Kapitel 9.2.3.1) beschrieben.

Lokale Netzwerke (LANs) wurden bisher im Wesentlichen zur verbindungslosen Übertragung von Datenpaketen zwischen Computern verwendet. Mit der Einbindung des Computers in Kommunikationsdienste werden neben Daten vermehrt Sprach- und Bildinformationen über Lokale Netzwerke übertragen. Für paketbasierte multimediale Kommunikationssysteme beschreibt beispielsweise der Standard ITU-T H.323 Schnittstellen, notwendige Einheiten und Abläufe.

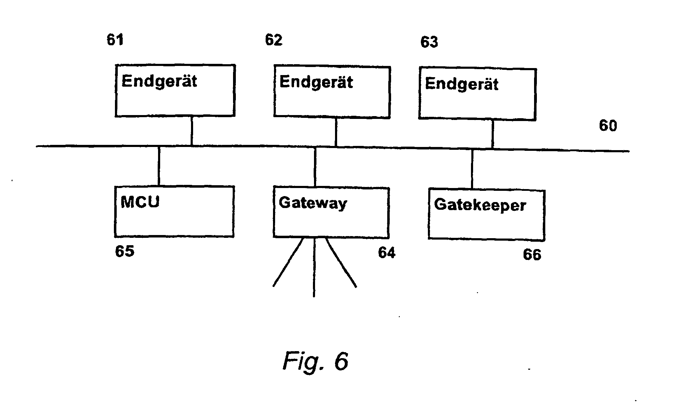

In Figur 6 ist die Grundstruktur einer Vorrichtung nach H.323 dargestellt. Mit dem paketbasierten Netzwerk 60 sind die Endgeräte 61, 62 und 63, das Gateway 64, der Gatekeeper 66 und die Multipoint Controll Unit (MCU) 65 verbunden. Die Endgeräte 61 - 63 können über das Netzwerk 60 miteinander kommunizieren, müssen sich dazu aber beim Gatekeeper 66 registrieren und bei ihm die Übertragungskapazität (Bandbreite) anfordern. Das Gateway 64 bildet die Schnittstelle der Vorrichtung zu anderen Netzen. Die MCU 65 wird im Standard H.323 für Konferenzschaltungen definiert.

Im Gegensatz zu konventionellen Endgeräten in Kommunikationssystemen ist beispielsweise ein Computer als Endgerät abschaltbar und danach im Kommunikationssystem nicht mehr erreichbar. Eine Anrufumleitung ist in dem H.323 verfeinernden Standard H.450.3 vorgesehen, wobei aber nicht der Fall eines abschaltbaren Endgerätes berücksichtigt wird. Wird also ein Endgerät nach einem Aktivieren einer Anrufumleitung abgeschaltet, so geht die Anrufumleitung verloren.

Aufgabe der vorliegenden Erfindung ist es, ein Verfahren bereitzustellen, das eine Anrufumleitung auch für abschaltbare Endgeräte in einem Kommunikationssystem gewährleistet.

Diese Aufgabe wird erfindungsgemäß durch ein Verfahren nach Anspruch 1 gelöst. Die Unteransprüche beschreiben bevorzugte Ausführungsformen der Erfindung.

Gemäß der Erfindung wird in einem Kommunikationssystem mit einer Vielzahl von Endgeräten, die mit einem lokalen Netzwerk (LAN) verbunden sind, eine Anrufumleitung von einem ersten Endgerät zu einem zweiten Endgerät aktiviert, eine Information über die Anrufumleitung an eine Stellvertretereinheit gemeldet, worauf ein Umleiten eines Anrufs für das erste Endgerät anhand der übertragenen Information erfolgt. Durch dieses Verfahren ist eine Anrufumleitung auch nach einem Abschalten des ersten Endgerätes möglich.

Gemäß einer bevorzugten Ausgestaltung des Verfahrens wird im Kommunikationssystem das Protokoll H. 323 verwendet. Dadurch können für die Kommunikation standardisierte Schnittstellen und Verfahren eingesetzt werden.

Die Stellvertretereinheit ist ein drittes Endgerät des Kommunikationssystems, da somit keine zusätzlichen übergeordneten Einheiten notwendig werden.

Gemäß einer weiteren bevorzugten Ausführungsform des Verfahrens speichert die Stellvertretereinheit eine Liste der im LAN registrierten Endgeräte. Dadurch kann die Stellvertretereinheit eine Anrufumleitung initiieren, ohne dass ein Versuch unternommen werden muss mit dem ersten Endgerät zu kommunizieren.

Die Erfindung wird im Folgenden unter Bezug auf die angefügten Zeichnungen anhand bevorzugter Ausführungsformen beschrieben. Die Zeichnungen zeigen im einzelnen:
- Fig. 1: eine schematische Darstellung einer Vorrichtung mit Stellvertretereinheit,
- Fig. 2: ein Ablaufdiagramm für eine Initialisierungsphase in einem Kommunikationssystem entsprechend Figur 1,
- Fig. 3: ein Ablaufdiagramm für das Aktivieren einer Anrufumleitung und Abschalten des ersten Endgerätes in dem Kommunikationssystem aus Figur 1,
- Fig. 4: ein Ablaufdiagramm für einen ankommenden Anruf Endgerätes in dem Kommunikationssystem aus Figur 1,
- Fig. 5: ein Ablaufdiagramm für das erfindungsgemäße Umleiten des Anrufes in dem Kommunikationssystem aus Figur 1,
- Fig. 6: eine schematische Darstellung einer Vorrichtung mit Einheiten gemäß H.323.

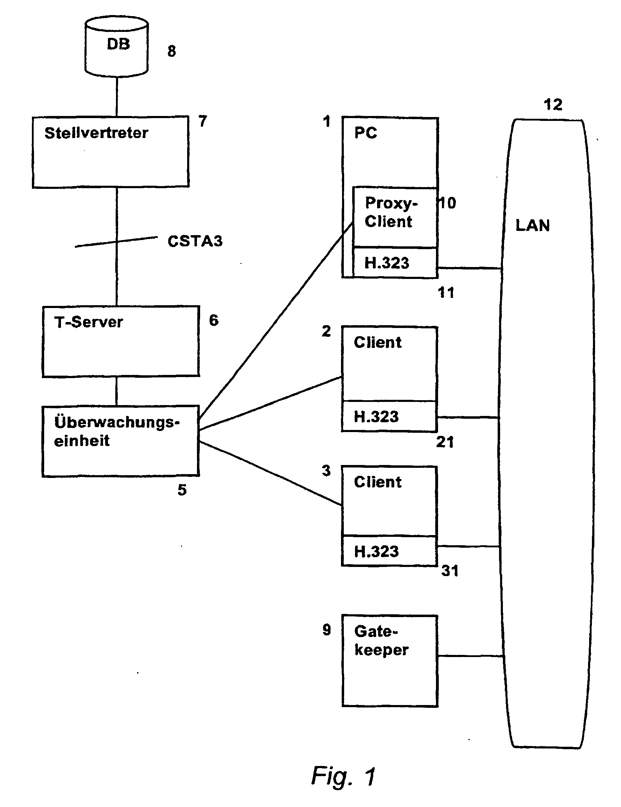

Eine bevorzugte Ausführungsform der Vorrichtung ist in Fig. 1 dargestellt. Ein PC als Endgerät 1 ist über seine H. 323-Schnittstelle 11 als Proxy-Client 10 mit dem lokales Netzwerk (LAN) 12 verbunden. Zwei weitere Endgeräte 2, 3 sind als Clients mit dem LAN 12 verbunden. Alle Endgeräte 1 bis 3 sind mit der Überwachungseinheit 5 verbunden, die wiederum über einen T-Server 6 und eine CSTA3-Schnittstelle mit der Stellvertretereinheit 7 mitsamt zugehöriger Datenbank 8 verbunden ist. In der Datenbank werden die aktivierten Anrufumleitungen gespeichert, die von den Endgeräten 1-3 über die Überwachungseinheit 5 und den T-Server 6 an den Stellvertreter 7 übertragen werden. Die Überwachungseinheit 5 überwacht die im LAN registrierten Endgeräte, sowie alle Anrufe und Verbindungen im LAN. Der T-Server 6 kann beispielsweise eine zentrale Telefonanlage mit einer Anbindung an das öffentliche oder lokale Telefonnetz oder ein Telefon-Server beispielsweise ein "Computer Telephon Integration" (CTI)-Server mit Anbindung an eine zentrale Telfonanlage sein. Die in Figur 1 gezeigte Anordnung wird auch als "Third Party-" oder zentrale Lösung bezeichnet. Eine weitere Beschreibung einer solchen Vorrichtung findet sich in der älteren Patentveröffentlichung DE 199 47 032.

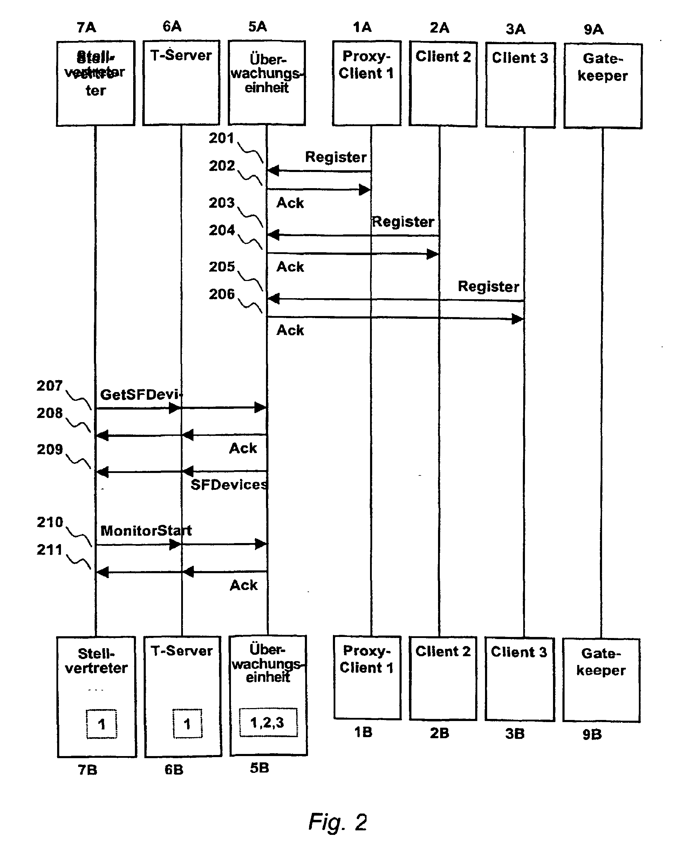

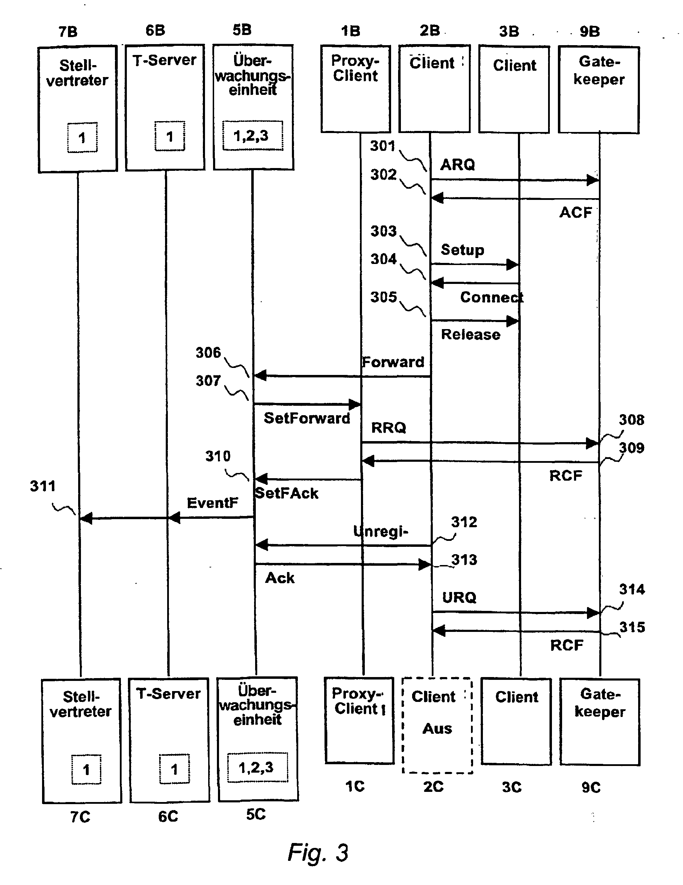

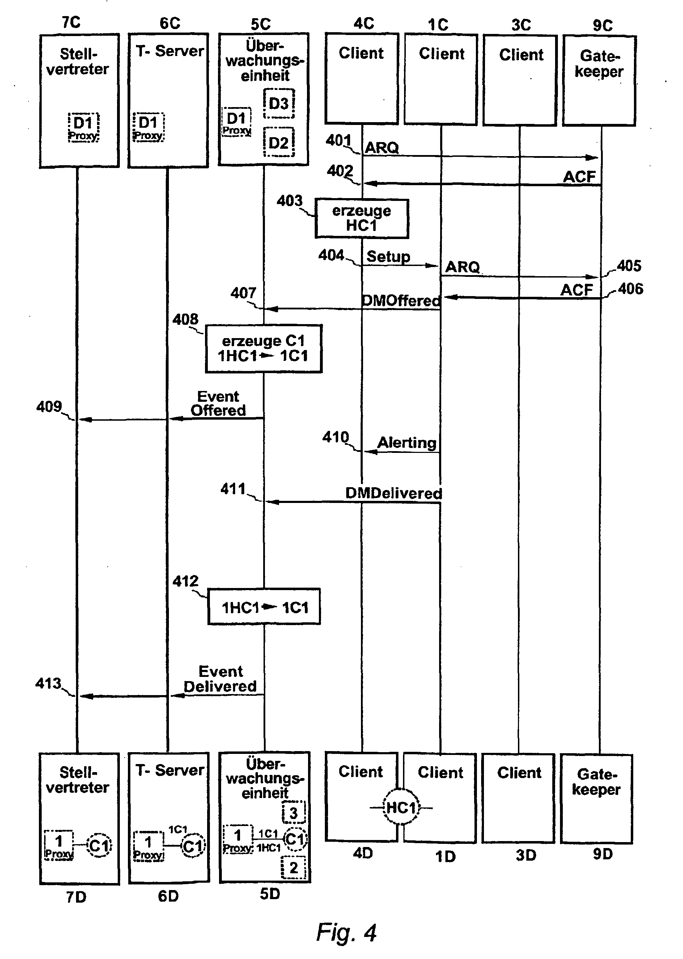

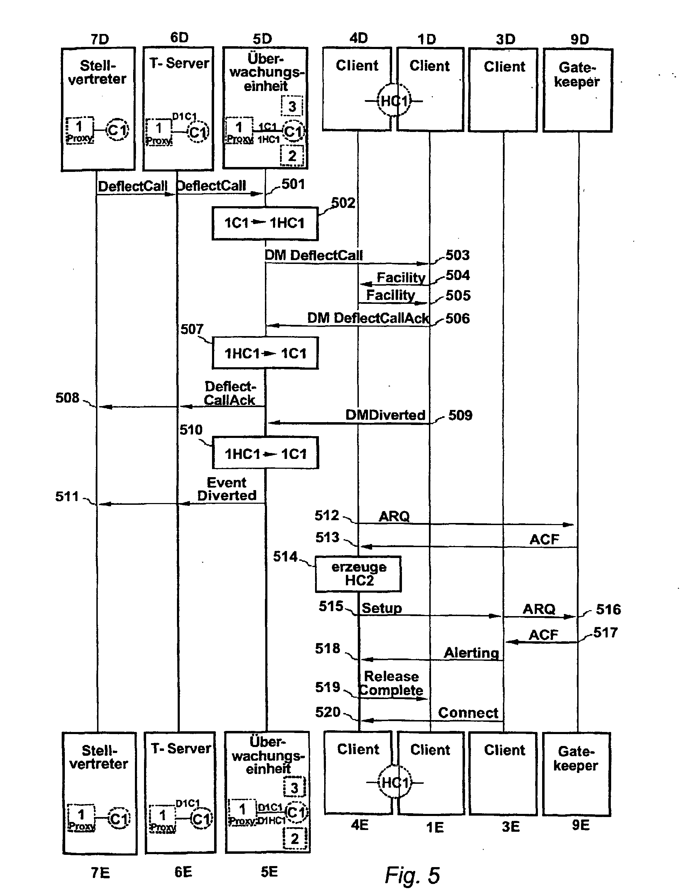

In den Fig. 2 bis 5 sind für die Vorrichtung aus Fig. 1 folgende Phasen dargestellt:
- Initialisierung in Fig. 2,
- Aktivieren einer Anrufumleitung in Fig. 3,
- Anruf von einem vierten Endgerät an den Umleitenden in Fig. 4,
- Umleitung des Anrufs in Fig. 5.

In den Ablaufdiagrammen ist jeweils der Nachrichtenaustausch zwischen den Endgeräten 1 bis 4, dem Gatekeeper 9, der Überwachungseinheit 5, dem T-Server 6 und dem Stellvertreter 7 dargestellt. Für jede Einheit ist ein Anfangs- und ein Endzustand durch das um einen Buchstaben erweiterte Bezugszeichen der Einheit gekennzeichnet (z.B. Endgerät 1 in Figur 2: 1A => 1B). Weiterhin sind folgende Vereinfachungen in den Figuren 2 bis 5 und deren Beschreibung vorgenommen worden: Eine Nachricht die inhaltlich unverändert von einer Einheit zur nächsten durchgereicht wird, ist durch zwei Pfeile aber nur mit einem Bezugszeichen versehen. Einfache Bestätigungsnachrichten (z.B.: Ack 313) werden nicht näher beschrieben.

In Fig. 2 ist dargestellt, wie sich die Endgeräte 1 bis 3 nacheinander durch die Nachrichten 201, 203, 205, die durch die Nachrichten 202, 204, 206 bestätigt werden, bei der Überwachungseinheit 5 registrieren. Das Endgerät 1 teilt dabei der Überwachungseinheit 5 seine Eigenschaft mit, dass er im lokalen Netzwerk 12 als Proxy-Client dient. Mit der Nachricht 207 fordert der Stellvertreter 7 die Liste der registrierten Endgeräte über den T-Server 6 von der Überwachungseinheit 5 ab. Nach einer Bestätigungsnachricht 208 werden mit der Nachricht 209 die Liste der registrierten Endgeräte (1 bis 3) von der Überwachungseinheit 5 zum Stellvertreter 7 übermittelt. Der Stellvertreter 7 fordert die Überwachungseinheit 5 mit der Nachricht 210 zum Start der Überwachung des Proxy-Client (Endgerät) 1 auf.

Die Überwachungseinheit 5 hat damit ausgehend von ihrem Ausgangszustand 5A den Endzustand 5B in Fig. 2 erreicht. Im Zustand 5B der Überwachungseinheit 5 kennzeichnen die Ziffern 1 bis 3 im gestrichelten Kästchen der Überwachungseinheit 5 die Tatsache, dass die Endgeräte 1 bis 3 in der Überwachungseinheit registriert sind, und der Fettdruck der Ziffer 1 die Tatsache, dass das Endgerät 1 als Proxy-Client registriert wurde.

In Fig. 3 ist das Aktivieren der Anrufumleitung des Endgerätes 2 auf das Endgerät 3, sowie das Abschalten des Endgerätes 2 dargestellt. Mit der Zugangsanfrage 301 fordert das Endgerät 2 vom Gatekeeper 9 die Adresse des Endgerätes 3 an. Danach fordert das Endgerät 2-den Aufbau einer Verbindung mit Endgerät 3 über die Nachricht 303 an. Das Endgerät 3 stellt diese Verbindung im Schritt 304 her, wobei es dem Endgerät 2 eine Zustandsinformation mitteilt, die beispielsweise Beschränkungen umfassen. Anschließend löst das Endgerät 2 die Verbindung zum Endgerät 3 mit der Nachricht 305. Mit der Nachricht 306 teilt das Endgerät 2 der Überwachungseinheit 5 eine aktive Anrufumleitung von Endgerät 2 zum Endgerät 3 vom Typ "sofortige Rufumleitung" mit. Die Überwachungseinheit 5 überträgt diese Information zum Endgerät 1 mit der Nachricht 307, woraufhin das Endgerät 1 den Gatekeeper 9 über eine Registrierungsanfrage 308 die Liste der umgeleiteten Endgeräte mitteilt. Nach der Antwort 309 des Gatekeepers 9 bestätigt das Endgerät 1 die Rufumleitung an die Überwachungseinheit 5 mit der Nachricht 310. Mit der Nachricht 311 leitet die Überwachungseinheit die Information der Anrufumleitung an den Stellvertreter 7 über den T-Server 6 weiter. Mit der Abmeldungsnachricht 312 und dessen Bestätigung 313 meldet sich das Endgerät 2 bei der Überwachungseinheit 5 ab, um nach der Abmeldung 314 und dessen Bestätigung 315 für die Abmeldung beim Gatekeeper 9 den Betrieb einzustellen. Die einzig dargestellte Veränderung von Zustand B zu Zustand C der Einheiten in Fig. 3 ist das Abschalten des Endgerätes 2.

In Fig. 4 ist ein eingehender Anruf eines Endgerätes 4 für das Endgerät 2 in seiner Nachrichtenfolge dargestellt, wobei die Einheiten zum Zustand C in den Zustand D übergehen. Das Endgerät 4 sendet eine Zugangsanfrage 401 an den Gatekeeper 9 und erhält mit der Bestätigung 402 als Zieladresse "D1 oder Proxy". Daraufhin erzeugt das Endgerät 4 im Schritt 403 eine H.323-Anrufidentifikationsnummer (Anruf-ID) HC1. Mit der Anruf-ID HCl fordert das Endgerät 4 beim Endgerät 1 in der Nachricht 404 den Aufbau einer Verbindung an, woraufhin das Endgerät 1 in der Anforderungsanfrage 405 die Bandbreite beim Gatekeeper 9 anfordert und mit der Nachricht 406 bestätigt bekommt. Das Endgerät 4 teilt der Überwachungseinheit 5 in der Nachricht 407 die H. 323-Anruf-ID HCl mit, woraufhin die Überwachungseinheit 5 eine Anruf-ID Cl für die "Computer Supported Telecommunications Applications" (CSTA)-Schnittstelle erzeugt und Cl mit HC1 verknüpft. Mit der Nachricht 409 teilt die Überwachungseinheit 5 über den T-Server 6 an den Stellvertreter 7 die angebotene Verbindung Cl mit den beteiligten Endgeräten mit. Mit der Nachricht 410 alarmiert das Endgerät 1 das Endgerät 4 und benachrichtigt in der Nachricht 411 die Überwachungseinheit von diesem Vorgang. Diese bestätigt im Schritt 412 ersetzt C1 durch HCl und sendet mit der Nachricht 413 die Information über die aufgebaute Verbindung zwischen Endgerät 1 und Endgerät 4 an den Stellvertreter 7 weiter. Im Zustand D der beteiligten Einheiten ist in dem Stellvertreter 7, ebenso wie im T-Server 6 und in der Überwachungseinheit 5 die Verbindung des Endgeräts 1 mit der Anruf-ID C1 dargestellt, wobei in der Überwachungseinheit zusätzlich die Information über die Verknüpfung der CSTA Anruf-ID C1 zur H.323 Anruf-ID HCl dargestellt ist. Zwischen den Endgeräten 1 und 4 in den Zuständen 4D und 1D ist die Verbindung HCl dargestellt.

In Fig. 5 ist die Umleitung des Anrufs aus Fig. 4 dargestellt. Mit dem Schritt 501 benachrichtigt der Stellvertreter 7 die Überwachungseinheit 5 von der Anrufumleitung, indem er ihr die neue Zieladresse (Endgerät 3) mitteilt. Im Schritt 502 wird die C1 durch HC1 ersetzt, um anschließend die Nachricht 503 von der Überwachungseinheit 5 zum Endgerät 1 weiterzuleiten. Mit der Nachricht 504 ruft das Endgerät 1 eine Rufumleitungsfunktion bei dem Endgerät 4 auf, die mit der Nachricht 505 bestätigt wird. Dann bestätigt das Endgerät 1 die Anrufumleitung an die Überwachungseinheit 5 für HCl, im Schritt 507 wird wiederum HC1 zu C1 konvertiert, um mit der Nachricht 508 als Bestätigung der Anrufumleitung an den Stellvertreter 7 weitergeleitet zu werden. Mit der Nachricht 509 informiert das Endgerät 4 die Überwachungseinheit 5 über die erfolgte Anrufumleitung mit Detailinformationen der Anrufumleitung, die nach dem Konvertierungsschritt 510 in der Nachricht 511 an den Stellvertreter 7 weitergeleitet wird. Im Schritt 512 fordert das Endgerät 1 eine Bandbreite für die Verbindung zur Endgeräteeinheit 3 an, die mit der Nachricht 513 bestätigt wird. Nach Erzeugung einer zweiten H. 323 Anruf-ID HC2 für die Verbindung zum Endgerät 3 im Schritt 514, wird mit der Nachricht 515 der Aufbau der Verbindung angefordert. Das Endgerät 3 richtet eine Zugangsanfrage 516 an den Gatekeeper 9, dann alarmiert das Endgerät 3 das Endgerät 4 für die zweite Anruf-ID HC2. Das Endgerät 4 löst mit der Nachricht 519 die Verbindung zum Endgerät 1 mit der Anruf-ID HCl und schließlich wird die Verbindung HC2 zwischen Endgerät 3 und Endgerät 4 mit der Nachricht 520 hergestellt.

In einer weiteren Ausgestaltung des Verfahrens ist beispielsweise das Endgerät 1 gleichzeitig die Stellvertretereinheit und übernimmt deren Aufgaben. Diese Anordnung wird auch als First-Party- oder Einzelplatz-Lösung bezeichnet.

## Patentansprüche

1. Verfahren zur Anrufumleitung in einem Kommunikationssystem mit einer Vielzahl von Endgeräten (1 - 4), die mit einem lokalen Netzwerk, LAN, (12) verbunden sind, bei dem
- eine Anrufumleitung von einem ersten Endgerät (2) zu einem zweiten Endgerät (3) aktiviert wird,
- eine Information über die aktivierte Anrufumleitung an eine Stellvertretereinheit (7) Übertragen wird,
- die Stellvertretereinheit eine Liste der mit dem LAN verbundenen Endgeräte speichert,
**dadurch gekennzeichnet, daß**
- die Anrufumleitung vom ersten Endgerät (2) zum zweiten Endgerät (3) eine sofortige ist,
- ein Anruf für das erste Endgerät (2) anhand der übertragenen Information und der gespeicherten Liste umgeleitet wird und
- als Stellvertretereinheit ein drittes Endgerät des Kommunikationssystems verwendet wird.

2. Verfahren nach Anspruch 1,
**dadurch gekennzeichnet, dass** das Protokoll H.323 im Kommunikationssystem verwendet wird.

3. Verfahren nach Anspruch 1 oder 2,
**dadurch gekennzeichnet, dass** das erste Endgerät abschaltbar ist.

4. Verfahren nach einem der Ansprüche 1 bis 3,
**dadurch gekennzeichnet, dass** die Stellvertretereinheit die Anrufumleitung steuert.

## Claims

1. Method for call diversion in a communications system with a multiplicity of terminals (1-4) which are connected to a local area network, LAN, (12), in which
- a call diversion is activated from a first terminal (2) to a second terminal (3),
- information relating to the activated call diversion is transmitted to an agent unit (7),
- the agent unit stores a list of the terminals connected to the LAN,
**characterized in that**
- the call diversion from the first terminal (2) to the second terminal (3) is immediate,
- a call is diverted for the first terminal (2) using the transmitted information and the stored list, and
- a third terminal of the communications system is used as the agent unit.

2. Method according to Claim 1, **characterized in that** the H.323 protocol is used in the communications system.

3. Method according to Claim 1 or 2, **characterized in that** the first terminal can be disabled.

4. Method according to one of Claims 1 to 3, **characterized in that** the agent unit controls the call diversion.

## Revendications

1. Procédé de renvoi d'appel dans un système de communication comprenant une pluralité de terminaux (1 - 4) connectés à un réseau local, LAN,(12), dans lequel
- un renvoi d'appel est activé depuis un premier terminal (2) vers un deuxième terminal (3),
- une information relative au renvoi d'appel activé est transmise à une unité de substitution (7),
- l'unité de substitution mémorise une liste des terminaux connectés au LAN,
**caractérisé en ce que**
- le renvoi d'appel depuis le premier terminal (2) vers le deuxième terminal (3) est un renvoi immédiat,
- un appel destiné au premier terminal (2) est renvoyé à l'aide de l'information transmise et de la liste mémorisée, et
- un troisième terminal du système de communication est utilisé comme unité de substitution.

2. Procédé selon la revendication 1,
**caractérisé en ce que** le protocole H.323 est utilisé dans le système de communication.

3. Procédé selon la revendication 1 ou 2,
**caractérisé en ce que** le premier terminal peut être éteint.

4. Procédé selon l'une des revendications 1 à 3,
**caractérisé en ce que** l'unité de substitution commande le renvoi d'appel.
